# EUROPEAN PATENT APPLICATION

(11) **EP 4 487 745 A1**
(43) Date of publication of application: **08.01.2025**
(21) Application number: 24184592.4
(22) Date of filing: 26.06.2024
(51) Int. Cl.: A47J 43/046, A47J 43/07

(54) **BLENDER JAR WITH PROTRUSIONS INTRODUCING ASYMMETRIC FLOW PATTERN AND BLENDER CONTAINING THE SAME**

(30) Priority: 28.06.2023 US 202318215363
(71) Applicant: Whirlpool Corporation, Benton Harbor, MI 49022 (US)
(72) Inventor: Cattes, Brandon W., BENTON HARBOR, 49022 (US); D'Alessandro, Kathryn E., BENTON HARBOR, 49022 (US); Heater, Timothy E., BENTON HARBOR, 49022 (US); Leitert, Andrew, BENTON HARBOR, 49022 (US); Redfern, Mark A., BENTON HARBOR, 49022 (US); Wolters, Jeremy T., BENTON HARBOR, 49022 (US)
(74) Representative: PGA S.p.A., Milano, Succursale di Lugano

(57) **Abstract**

A blender (10) having a blender jar (14) with one or more protrusions (38) in the interior thereof for creating additional turbulent flow within the blender jar (14). The protrusions (38) can be formed as three-dimensional objects having a perimeter integrally formed with a portion of an upstanding wall (22) of the blender jar (14) and can also be formed integrally with a base portion (20) of the blender jar (14) and can extend vertically higher than a blade path (36) defined by a rotatable blade (34) disposed adjacent to the base portion (20) of the blender jar (14).

## Description

### TECHNICAL FIELD

This invention relates to a blender jar for a small appliance kitchen blender, including one or more protrusions to encourage asymmetric turbulent flow within the blender jar to better comminute the foodstuffs therein.

### BACKGROUND

Blenders have become even more ubiquitous in the kitchen as well as in numerous retail establishments with the explosion in popularity of various blended drinks. A typical blender comprises a motor housing that rotates a mount that cooperates with a rotatable blade disposed on a bottom surface of a blender container (often referred to as a "jar") that preferably creates a turbulent fluid flow from the ingredients loaded into the blender jar as they flow through, and are comminuted within, the rotating blade assembly to mix the contents therein to a desired consistency.

When blending liquids or relatively soft solids like yogurt or ice cream, blending these items generally produces a desirable result. However, when using ice or any of the numerous other foodstuffs typically blended into drinks (e.g., fruits, vegetables, candy, vitamins, supplements, and the like), it is important to distribute the comminuted solids as evenly as possible within the blended product.

Depending upon the structures inside the blender jar (or the lack thereof), small eddies or pockets of unblended or less-blended food stuffs can collect, typically in a location outside of the reach of the rotatable blade. When this occurs, the user must stop operation of the blender, and safely scrape the collected foodstuffs back toward the blade and attempt to re-blend the foodstuffs until a satisfactory result occurs, causing frustration and increasing the time to prepare a satisfactory blended food product (a consideration in the home, but critically important in a retail establishment).

### BRIEF SUMMARY

In one aspect of the invention, the invention relates to a blender jar for operable connection to a blender for comminuting foodstuffs. The blender jar can include a base configured to be mounted to a blender, the base comprising a rotatable blade mounted thereto for operable interconnection to a blender. The rotatable blade can define a blade radius and a blade path that can be determined by a vertical gap between upper and lower tips of the rotatable blade. A wall can extend upwardly from the base having an interior surface that defines an internal blending chamber with an interior surface of the base. The wall can have a terminal edge for receipt of a lid for containing foodstuffs within the blending chamber.

At least one protrusion can be integrally formed with at least one of the interior surface of the base and the interior surface of the wall. The protrusion can extend into the internal blending chamber without extending to the blade radius of the rotatable blade. The protrusion can have at least one surface that extends from a lower portion adjacent the base and an upper portion above the blade path of the rotatable blade.

Various alternative embodiments of the invention are contemplated without departing from the scope of the invention. For example, the interior surface of the wall can define a polygonal surface having at least three vertices. The at least one protrusion can be disposed within at least one of the at least three vertices of the interior surface of the wall. The at least one protrusion can comprise a plurality of protrusions disposed within a plurality of the at least three vertices with at least one vertex disposed between adjacent protrusions. At least one protrusion can comprise a plurality of protrusions disposed within a plurality of the at least three vertices with at least two of the plurality of protrusions disposed within adjacent vertices.

The blender jar wall can define a generally rectangular cross section having four vertices and the at least one protrusion comprises a plurality of protrusions disposed within oppositely-disposed vertices. The wall can also define a generally rectangular cross section having four vertices and the at least one protrusion comprises a plurality of protrusions disposed within adjacent vertices. The wall can define a generally rectangular cross section having four vertices and the at least one protrusion comprises a plurality of protrusions disposed within all vertices, excluding one.

Various embodiments of the surfaces comprising the at least one protrusion are also contemplated without departing from the scope of the invention. The at least one protrusion can comprise a generally planar surface having a perimeter integrally formed with a portion of the base and a portion of the wall above the blade path. The at least one protrusion can comprise a first generally planar surface having a perimeter integrally formed with a portion of the base and a portion of the wall above the blade path and a second generally planar surface having a perimeter integrally formed with a portion of the base and a portion of the wall above the blade path, the first generally planar surface can intersect the second generally planar surface along a midline of the at least one protrusion. The at least one protrusion can have an upper portion comprising a generally planar surface that has an edge formed with an upper edge of the first generally planar surface and an upper edge of the second generally planar surface. The upper portion of the at least one protrusion can comprise a third generally planar surface and a fourth generally planar surface that are disposed angularly with respect to one another.

In another aspect of the invention, the blender jar described herein can be included with components of a blender. For example, a blender for comminuting foodstuffs can comprise a housing comprising a motor, a controller operably connected to the motor for operating the motor through a plurality of blending modes, a seat defined on an upper portion of the housing, and the seat comprising a bearing having a keyed portion configured to be rotatably driven by the motor. A blender jar can comprise a base configured to be mounted on the seat, the base comprising a rotatable blade mounted thereto for operable interconnection to the keyed portion of the seat wherein rotatable motion of the keyed portion will impart rotatable motion to the rotatable blade. The rotatable blade can define a blade radius and a blade path, wherein the blade path can be determined by a vertical gap between upper and lower tips of the rotatable blade. A wall can extend upwardly from the base that has an interior surface defining an internal blending chamber with an interior surface of the base. The wall can have a terminal edge for receipt of a lid for containing foodstuffs within the blending chamber. The blender jar associated with the blender as described herein can include the various surfaces and topographical features of the at least one protrusion as previously described.

### BRIEF DESCRIPTION OF THE DRAWINGS

In the drawings:
Figure 1 is a front elevational view of a blender comprising a motor housing with a blender jar mounted thereon having a rotatable blade assembly operably connected to the motor housing for comminuting foodstuffs within the blender jar.
Figure 2 is a front elevational view of the blender jar shown in Figure 1 illustrating a protrusion disposed within the blender jar extending above a blade path defined between upper and lower vertical limits of the rotatable blade assembly disposed within the blender jar.
Figure 3A is a top plan view looking down into the blender jar of Figures 1-2 with the lid removed showing a protrusion disposed within the blender jar at a vertex of a pair of sides of the blender jar.
Figure 3B is a top plan view in a similar orientation as that shown in Figure 3A in which a plurality of protrusions are shown disposed within the blender jar in an opposite orientation from one another.
Figure 3C is a top plan view in a similar orientation as that shown in Figure 3A in which a plurality of protrusions are shown in an adjacent orientation along a common side of the blender jar.
Figure 3D is a top plan view in a similar orientation as that shown in Figure 3A in which a plurality of protrusions are shown disposed within all vertices, except for one, of the blender jar.
Figure 4A is a cross-sectional view of a base portion of the blender jar showing a first embodiment of the protrusion having a first generally planar surface configuration.
Figure 4B is a cross-sectional view of a base portion of the blender jar showing a second embodiment of the protrusion having pair of angularly-closed surfaces having a common side.
Figure 4C is a cross-sectional view of a base portion of the blender jar showing a third embodiment of the protrusion having a pair of angularly disposed surfaces having a common side and an intermediate angular portion.
Figure 4D is a cross-sectional view of a base portion of the blender jar showing a fourth embodiment of the protrusion having a pair of angularly disposed surfaces having a common side and an upper angular portion formed by a pair of angularly-disposed surfaces.
Figure 5 is a front elevational view of the blender jar shown in Figures 1-2 showing an example embodiment of the protrusion according to the invention and schematic arrows showing a preferred path of the comminuted foodstuffs as the rotatable blade assembly moves the foodstuffs being blended in the blender jar in an asymmetric fashion.
Figure 6 is an enlarged schematic portion of the protrusion shown in Figure 5, illustrating generally random impingements of blended foodstuffs are redirected by impact upon the protrusion.

### DETAILED DESCRIPTION

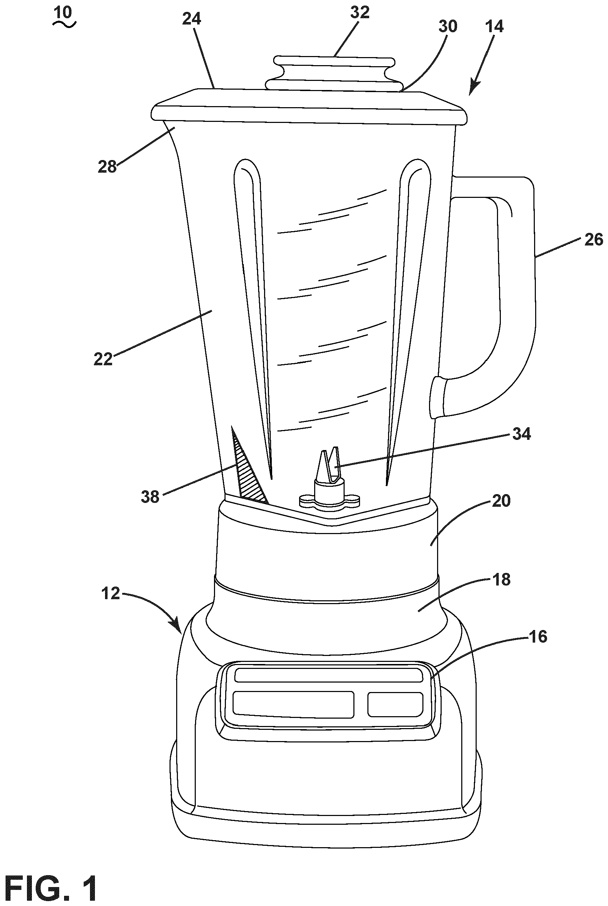

Aspects of the present invention relate to a blender jar having one or more protrusions arranged and configured to introduce asymmetric flow patterns within the blender jar. For purposes of description related to the figures, direction terms such as "upper," "lower," "right," "left," "rear," "front," "vertical," "horizontal," and derivatives thereof, if any, shall relate to the invention as oriented in FIG. 1 from the perspective of a user looking at the front of the blender. However, it is to be understood that aspects of the present invention may assume various alternative orientations, except where expressly specified to the contrary.

Turning now to the drawings into Figure 1 in particular, a blender 10 is shown comprising a housing 12 and a blender jar 14.

The housing 12 can be any well-known blender housing as would be known to one skilled in the art and typically comprises a control panel 16, which is not required if the blender 10 is to be operated remotely, for providing signals to a motor internal to the housing 12 that can provide rotational driving movement to a bearing (not shown) that, in turn, can be operably interconnected via an upper seat portion 18 of the housing 12 to a corresponding component of the blender jar 14. The particular components of the housing 12 shown in the drawings should not be construed as limiting on the scope of the invention contemplated herein, for any number of components that can operate as the housing 12 of the blender 10 would be apparent to one skilled in the art.

Turning to Figures 1-2, the particular embodiment of the blender jar 14 will now be described. The blender jar 14 generally comprises a base portion 20, and an upstanding wall 22, and a lid 24. The base portion 20 of the blender jar 14 typically includes structural components sufficient to mount to the upper seat 18 of the housing 12. The particular structural components for mounting the base portion 20 to the upper seat 18 are not germane to the invention and many suitable examples would be known to one skilled in the art. The upstanding wall 22 typically has a lower portion having a geometrical perimeter that corresponds with a perimeter of the base portion 20 and extends upwardly therefrom. The particular example of the upstanding wall 22 shown in Figure 1 should not be limited as limiting to the scope of the invention. It would be known to one skilled in the art that the upstanding wall 22 may not have a common cross-section across its height and the perimeter of an interior surface of the upstanding wall 22 may change in shape as it extends upwardly. In the example shown herein, a perimeter of the upstanding wall 22 may be circular adjacent to the upper seat 18 of the housing, but may change to have a different polygonal shape as the upstanding wall 22 extends upwardly from the base portion 20 of the blender jar 14. An upper edge of the upstanding wall 22 typically includes a pouring spout 28, the function thereof would be apparent to one skilled in the art as being for pouring blended foodstuffs out of the interior of the blender jar 14. The lid 24 typically has a perimeter configured to be sealingly engaged with an upper edge of the upstanding wall 22, including the pouring spout 28, to prevent materials within the blender jar 14 from escaping during blending operations by the blender 10. The lid 24 typically has an access hole 30 for providing additional foodstuffs to the interior of the blender jar 14 without needing to disengage the lid 24 from the upper edge of the upstanding wall 22, as well as an access hole plug 32 adapted to sealingly fit within the access hole 30 also to prevent materials within the blender jar 14 from escaping during blending operations. It will be understood that the particular embodiment of the lid 24 shown in the drawings is by example only and should not be construed as limiting on the scope of the invention.

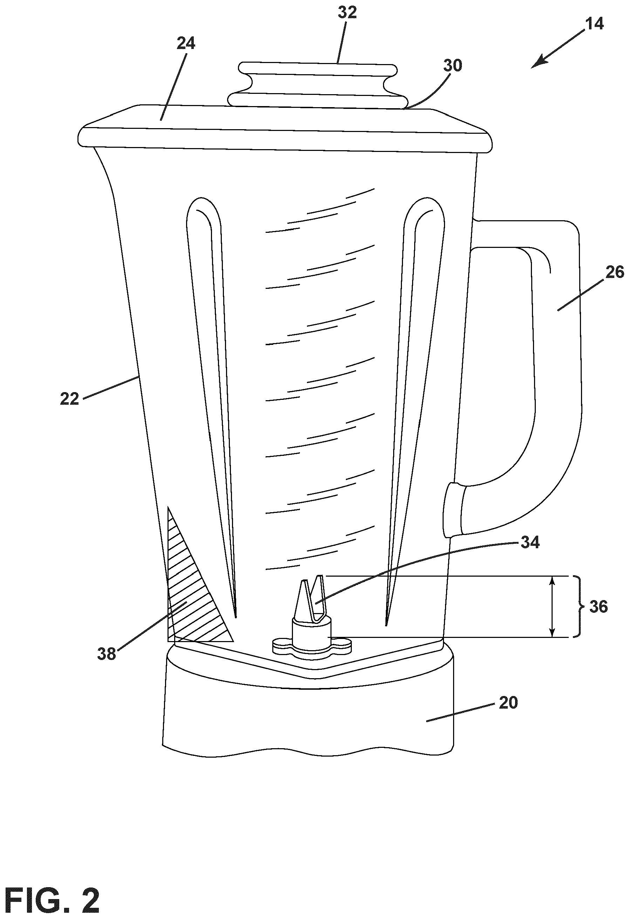

As would be apparent to one skilled in the art, the base portion 20 of the blender jar 14 contains a rotatable blade 34. The rotatable blade 34 typically has a suitable structure, such as a keyed opening or protrusion, configured to receive a mating component on the housing 12 that is operably interconnected to the motor therein (not shown). Once the blender jar 14 is suitably placed atop the housing 12, rotational motion created by the motor within the housing 12 is imparted through these mating components to provide a suitable rotational drive to the rotatable blade 34. The particular embodiment of the rotatable blade shown in the drawings should also not be construed as limiting upon the scope of the invention, as any suitable blade component could easily be substituted without departing from the scope of this invention. It should be noted that, with reference to Figure 2, the various blade subcomponents of the rotatable blade 34 can have varying heights and angles so as to define a vertical height of the rotatable blade, referred to in Figure 2 with reference numeral 36 and the term "blade path."

In one aspect of the invention, a protrusion 38 is provided within the interior of the blender jar 14. It will be understood that to one skilled in the art, that the protrusion 38 can be provided singularly within the blender jar 14 or as a plurality of protrusions 38 spaced at regular or irregular intervals within the interior of the blender jar 14.

The protrusion 38 can have any number of geometric configurations and still be contemplated within the scope of the invention described herein. The triangular shape of the protrusion 38 shown in the drawings, and in Figures 1, 2, and 3A-3D in particular, are shown by example only and the particular shape used for the illustrative embodiment in the drawings should not be construed as limiting the scope of the invention described herein. The protrusion 38 is configured to create an obstacle adjacent the rotatable blade 34 to preferably redirect foodstuffs being blended in an asymmetric manner and to provide an interruption of laminar flow that may be formed within the interior of the blender jar 14. The protrusion 38 can have a perimeter integrally formed with at least one of the interior surfaces of the base 20 and the upstanding wall 22. A lower portion of the protrusion 38 is preferably formed adjacent to, or integral with, the base portion 20 of the blender jar 14 and extends laterally inwardly from the upstanding wall 22 a distance sufficient to provide an interruption to the flow within the blender jar 14 but not to interfere with, or contact, the physical components of the rotatable blade 34. It will be understood that the lateral extent to which the protrusion 38 extends inwardly from the interior surface of the upstanding wall 22 can vary along the height of the protrusion 38. In one embodiment of the invention, the height of the protrusion 38 extends vertically above the height defined by the blade path 36 of the rotatable blade 34.

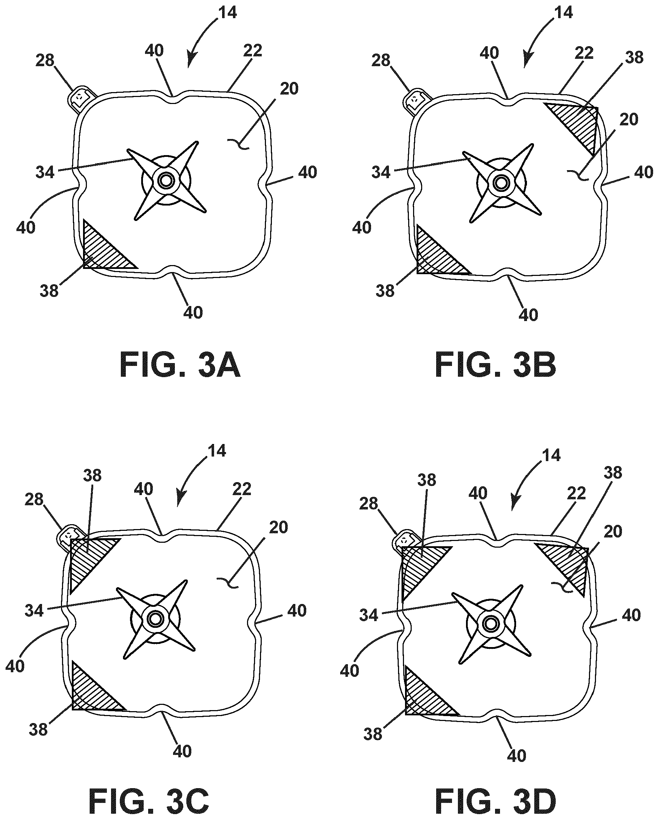

Turning to Figures 3A-3D, various embodiments of the invention are shown wherein one or more protrusions 38 are arranged in various fashions with respect to the base portion 20 and the upstanding wall 22 of the blender jar 14. The orientation of Figures 3A-3D is a top plan view looking down into the interior of the blender jar 14 with the lid 24 removed. In this manner the perimeter geometry of the upstanding wall 22 is shown with respect to an upper edge thereof. It will be understood to one skilled in the art that the cross-section of the upstanding wall 22 can change throughout its height. In the example blender jar 14 shown in the drawings, the upstanding wall 22 is shown to have a generally curved polygonal shape having four vertices and four sides. One skilled in the art will understand that the particular cross-sectional shape of the upstanding wall 22 can take on a myriad of geometrical or polygonal shapes without departing from the scope of the invention. Indeed, additional or fewer vertices and sides, including zero vertices for a circular or major or minor vertices for an elliptical configuration, can be provided in alternate configurations of the upstanding wall 22 without departing from the scope of the invention. In addition, the embodiment of the blender jar 14 shown in the drawings also includes one or more ribs 40 extending at least a portion of the height of the upstanding wall 22. It will also be understood by one skilled in the art that the ribs 40 can be provided in additional or fewer numbers, including zero, without departing from the scope of the invention.

Figure 3A shows a single protrusion 38 disposed generally within one vertex of the particular polygonal shape shown for the upstanding wall 22. Figure 3B shows a pair of protrusions 38 disposed in opposite vertices of the particular polygonal shape shown for the upstanding wall 22. Figure 3C shows a pair of protrusions 38 disposed in adjacent vertices of the particular polygonal shape shown for the upstanding wall 22. Figure 3D shows three protrusions 38 disposed within three of the four vertices shown in the particular polygonal shape shown for the upstanding wall 22. For other polygonal shapes having a different number of sides and vertices than four for the upstanding wall 22, it will be understood by one skilled in the art that the invention contemplates placing one or more of the protrusions 38 in any combination from one to *n-1* of the vertices in the particular polygonal shape for alternate embodiments of the upstanding wall 22 without departing from the scope of the invention.

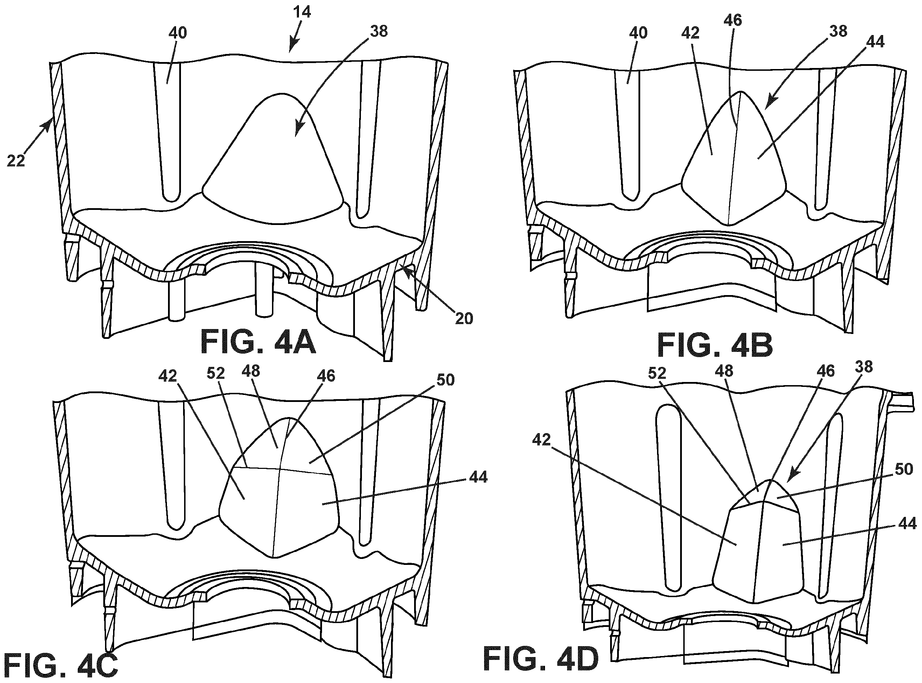

Turning to Figures 4A-4D, a cutaway portion of the blender jar 14 showing a portion of the base portion 20 in the upstanding wall 22 thereof is shown in each of these drawings. For purposes of clarity, the rotatable blade 34 has been removed so that the protrusion 38 can be more clearly illustrated in Figures 4A-4D. The protrusion 38, in the example embodiments shown in Figures 4A-4D, is shown having a perimetrical edge intricately formed with a portion of the base portion 20 and a portion of the upstanding wall 22 to form a three-dimensional intrusion into the interior of the blender jar 14. In Figure 4A, the protrusion 38 is shown as a generally convex member having a curved outer surface that extends into the interior of the blender jar 14. The protrusion 38 can also have a planar outer surface that is bordered by intersecting a portion of the upstanding wall 22 and the base portion 20 forming essentially a polygonal shape. Figure 4B shows an alternative embodiment of the protrusion 38 formed by a first surface 42 and a second surface 44 each formed as a generally convex or generally planar surface and is integrally formed with a portion of the upstanding wall 22 and the base portion 20. In the embodiment shown in Figure 4B, the first surface 42 and second surface 44 are angularly disposed with respect to one another, preferably along a midline 46 of the protrusion 38. In the embodiment shown in Figure 4C, the protrusion 38 is also formed with a first surface 42 and a second surface 44 also angularly-disposed to one another, preferably along a midline 46 of the protrusion 38. Additionally, in the upper portion of the protrusion 38 is formed by a third surface 48 and a fourth surface 50. As shown in the embodiment of Figure 4C, the first surface is angularly disposed with respect to the second surface 44, the third surface 48, and the fourth surface 50. The first and third surfaces 42 and 48 are preferably angularly disposed with respect to the second and fourth surfaces 44 and 50, preferably along the midline 46 of the protrusion 38. The first surface 42 is preferably angularly disposed with respect to the third surface 48 across a generally lateral line 52 and the second surface 44 is preferably angularly disposed with respect to the fourth surface 50 across the lateral line 52. Figure 4D is an embodiment similar to that shown in Figure 4C but that the lateral line 52 is disposed generally higher than the embodiment shown in Figure 4C such that the angular disposition between the surfaces comprising the protrusion 38 can be varied. In some instances, the surfaces 48 and 50 can be disposed at or above the blade path.

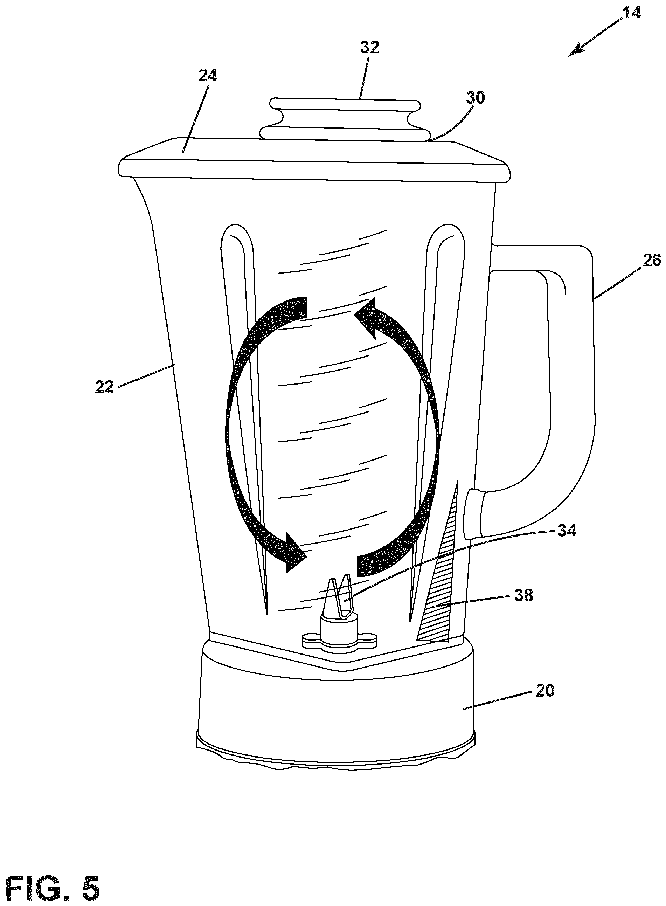

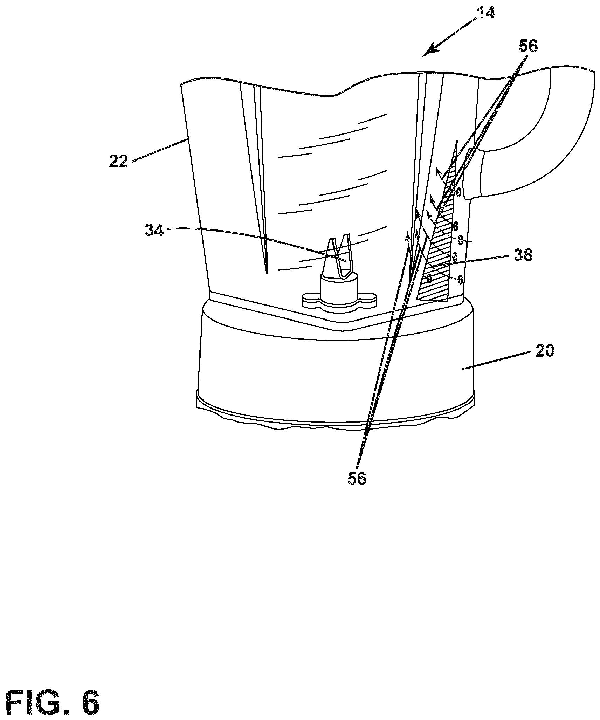

Turning to Figure 5, the blender jar 14 is shown in operation with a pair of schematic mixture arrows 54 showing an example direction of blending typically created by the motor of the housing 12 when the rotatable blade 34 is rotated during any number of blending modes. The typical goal of most blending operations, as would be apparent to one skilled in the art, is to drive the foodstuffs being blended and comminuted within the blender jar 14 in a rotational fashion such that foodstuffs are drawn downwardly toward the rotatable blades 34 within the blender jar 14. In order to prevent some of the problems mentioned above with the prior art, the protrusions 38 serve to serve multiple functions within the blender jar 14. First, a lower portion of the protrusion 38 serves to restrict the area adjacent the rotatable blade 34 to direct foodstuffs within the interior of the blender jar 14 toward the rotatable blade 34. In addition, as shown in Figure 6, food particles 56 can be shown impinging upon the exterior surfaces of the protrusion 38 and being directed in an upwardly direction so that they can be later drawn back downwardly by the rotatable blade 34 and further blended and comminuted and preventing eddies or pockets of foodstuffs within the interior of the blender jar 14 that can prevent those foodstuffs from being sufficiently comminuted. Finally, the protrusion 38 serves to disrupt laminar flow within the blender jar 34 and encourage turbulence within the foodstuffs being blended so that more consistent mixing and blending can be obtained.

To the extent not already described, the different features and structures of the various embodiments can be used in combination with each other as desired. That one feature may not be illustrated in all of the embodiments is not meant to be construed that it cannot be, but is done for brevity of description. Thus, the various features of the different embodiments can be mixed and matched as desired to form new embodiments, whether or not the new embodiments are expressly described. All combinations or permutations of features described herein are covered by this invention. Further, while the invention has been specifically described in connection with certain specific embodiments thereof, it is to be understood that this is by way of illustration and not of limitation. In addition to the concepts covered by the below claims, the following clauses can also provide the basis for claims in any possible combinations:

A blender jar for operable connection to a blender for comminuting foodstuffs comprising a base configured to be mounted to a blender, the base comprising a rotatable blade mounted thereto for operable interconnection to a blender, the rotatable blade defining a blade radius and a blade path, the blade path determined by a vertical gap between upper and lower tips of the rotatable blade, a wall extending upwardly from the base having an interior surface defining an internal blending chamber with an interior surface of the base, the wall having a terminal edge for receipt of a lid for containing foodstuffs within the blending chamber, and at least one protrusion integrally formed with at least one of the interior surface of the base and the interior surface of the wall, the protrusion extending into the internal blending chamber without extending to the blade radius of the rotatable blade, the protrusion having at least one surface that extends from a lower portion adjacent the base and an upper portion above the blade path of the rotatable blade.

The blender jar of the preceding clause wherein the interior surface of the wall defines a polygonal surface having at least three vertices.

The blender jar of any of the preceding clauses wherein the at least one protrusion is disposed within at least one of the at least three vertices of the interior surface of the wall.

The blender jar of any of the preceding clauses wherein the at least one protrusion comprises a plurality of protrusions disposed within a plurality of the at least three vertices with at least one vertex disposed between adjacent protrusions.

The blender jar of any of the preceding clauses wherein the at least one protrusion comprises a plurality of protrusions disposed within a plurality of the at least three vertices with at least two of the plurality of protrusions disposed within adjacent vertices.

The blender jar of any of the preceding clauses wherein the wall defines a generally rectangular cross section having four vertices and the at least one protrusion comprises a plurality of protrusions disposed within oppositely-disposed vertices.

The blender jar of any of the preceding clauses wherein the wall defines a generally rectangular cross section having four vertices and the at least one protrusion comprises a plurality of protrusions disposed within adjacent vertices.

The blender jar of any of the preceding clauses wherein the wall defines a generally rectangular cross section having four vertices and the at least one protrusion comprises a plurality of protrusions disposed within all vertices, excluding one.

The blender jar of any of the preceding clauses wherein the at least one protrusion comprises a generally planar surface having a perimeter integrally formed with a portion of the base and a portion of the wall above the blade path.

The blender jar of any of the preceding clauses wherein the at least one protrusion comprises a first generally planar surface having a perimeter integrally formed with a portion of the base and a portion of the wall above the blade path and a second generally planar surface having a perimeter integrally formed with a portion of the base and a portion of the wall above the blade path, the first generally planar surface intersecting the second generally planar surface along a midline of the at least one protrusion.

The blender jar of any of the preceding clauses wherein the at least one protrusion has an upper portion comprising a generally planar surface that has an edge formed with an upper edge of the first generally planar surface and an upper edge of the second generally planar surface.

The blender jar of any of the preceding clauses wherein the upper portion of the at least one protrusion comprises a third generally planar surface and a fourth generally planar surface that are disposed angularly with respect to one another.

A blender for comminuting foodstuffs comprising a housing comprising a motor, a controller operably connected to the motor for operating the motor through a plurality of blending modes, a seat defined on an upper portion of the housing, the seat comprising a bearing having a keyed portion configured to be rotatably driven by the motor, a blender jar comprising a base configured to be mounted on the seat, the base comprising a rotatable blade mounted thereto for operable interconnection to the keyed portion of the seat wherein rotatable motion of the keyed portion will impart rotatable motion to the rotatable blade, the rotatable blade defining a blade radius and a blade path, the blade path determined by a vertical gap between upper and lower tips of the rotatable blade, a wall extending upwardly from the base having an interior surface defining an internal blending chamber with an interior surface of the base, the wall having a terminal edge for receipt of a lid for containing foodstuffs within the blending chamber, and at least one protrusion integrally formed with at least one of the interior surface of the base and the interior surface of the wall, the protrusion extending into the internal blending chamber without extending to the blade radius of the rotatable blade, the protrusion having at least one surface that extends from a lower portion adjacent the base and an upper portion above the blade path of the rotatable blade.

The blender of the preceding clause wherein the at least one protrusion comprises a generally planar surface having a perimeter integrally formed with a portion of the base and a portion of the wall above the blade path.

The blender of any of the preceding clauses wherein the at least one protrusion comprises a first generally planar surface having a perimeter integrally formed with a portion of the base and a portion of the wall above the blade path and a second generally planar surface having a perimeter integrally formed with a portion of the base and a portion of the wall above the blade path, the first generally planar surface intersecting the second generally planar surface along a midline of the at least one protrusion.

The blender of any of the preceding clauses wherein the at least one protrusion has an upper portion comprising a generally planar surface that has an edge formed with an upper edge of the first generally planar surface and an upper edge of the second generally planar surface.

The blender of any of the preceding clauses wherein the upper portion of the at least one protrusion comprises a third generally planar surface and a fourth generally planar surface that are disposed angularly with respect to one another.

While the invention has been specifically described in connection with certain specific embodiments thereof, it is to be understood that this is by way of illustration and not of limitation. Reasonable variation and modification are possible within the scope of the forgoing written description and drawings without departing from the scope of the invention which is defined in the appended claims.

## Claims

1. A blender jar (14) for operable connection to a blender (10) for comminuting foodstuffs, the blender jar (14) comprising:
a base (20) configured to be mounted to a blender (10);
a rotatable blade (34) mounted on the base (20) for operable interconnection to a blender (10), the rotatable blade (34) defining a blade radius and a blade path (36), the blade path (36) being determined by a vertical gap between upper and lower tips of the rotatable blade (34);
a wall (22) extending upwardly from the base (20), the wall (22) having an interior surface defining an internal blending chamber with an interior surface of the base (20); and
at least one protrusion (38) integrally formed with at least one of the interior surface of the base (20) and the interior surface of the wall (22), the protrusion (38) extending from a lower portion adjacent the base (20) to an upper portion above the blade path (36) of the rotatable blade (34).

2. The blender jar (14) of claim 1 further comprising a lid (24), wherein the wall (22) has a terminal edge for receipt of the lid (24) for containing foodstuffs within the blending chamber,
optionally wherein the terminal edge of the wall (22) includes a pouring spout (28) and the lid (24) has a perimeter configured to be sealingly engaged with the terminal edge of the wall (22), including the pouring spout (28).

3. The blender jar (14) of claims 1 or 2 wherein the protrusion (38) extends into the internal blending chamber without extending to the blade radius of the rotatable blade (34).

4. The blender jar (14) of any one of claims 1 to 3 wherein the interior surface of the wall (22) defines a polygonal surface having at least three vertices and wherein the at least one protrusion (38) is disposed within at least one of the at least three vertices of the interior surface of the wall (22).

5. The blender jar (14) of claim 4 wherein the at least one protrusion (38) comprises a plurality of protrusions (38) disposed within a plurality of the at least three vertices.

6. The blender jar (14) of claim 5 wherein the protrusions (38) of the plurality of protrusions (38) are disposed within a plurality of the at least three vertices with at least one vertex disposed between adjacent protrusions and/or with at least two of the plurality of protrusions disposed within adjacent vertices.

7. The blender jar (14) of any one of claims 4 to 6 wherein the at least one protrusion (38) comprises:
a single protrusion (38) disposed within one vertex of the interior surface of the wall (22) or
a pair of protrusions (38) disposed within opposite vertices of the interior surface of the wall (22) or
a pair of protrusions (38) disposed within adjacent vertices of the interior surface of the wall (22) or
three protrusions (38) disposed within adjacent vertices of the interior surface of the wall (22)
optionally wherein the interior surface of the wall (22) defines a polygonal surface having four vertices or more than four vertices.

8. The blender jar (14) of any one of claims 4 to 7 wherein the at least one protrusion (38) comprises a plurality of protrusions (38) disposed within oppositely-disposed vertices and/or within adjacent vertices.

9. The blender jar (14) of claims 4 to 8, wherein the at least one protrusion (38) comprises a plurality of protrusions (38) disposed within all vertices, excluding one.

10. The blender jar (14) of claims 8 or 9, wherein the wall (22) defines a generally square or rectangular cross section having four vertices.

11. The blender jar (14) of any one of claims 1 to 10 wherein the at least one protrusion (38) comprises at least one generally planar surface having a perimeter integrally formed with a portion of the base (20) and a portion of the wall (22) above the blade path (36).

12. The blender jar (14) of claim 11 wherein the at least one protrusion (38) comprises a first generally planar surface having a perimeter integrally formed with a portion of the base (20) and a portion of the wall (22) above the blade path (36) and a second generally planar surface having a perimeter integrally formed with a portion of the base (20) and a portion of the wall (22) above the blade path (36), the first generally planar surface intersecting the second generally planar surface along a midline of the at least one protrusion (38),
optionally wherein the at least one protrusion (38) has an upper portion comprising a generally planar surface that has an edge formed with an upper edge of the first generally planar surface and an upper edge of the second generally planar surface,
the upper portion of the at least one protrusion (38) comprising in particular a third generally planar surface and a fourth generally planar surface disposed angularly with respect to one another.

13. The blender jar (14) of any one of claims 1 to 12 wherein the at least one protrusion (38) is configured to form a three-dimensional intrusion into the internal blending chamber,
optionally wherein the at least one protrusion (38) is a convex member having a curved outer surface that extends into the internal blending chamber, the protrusion (38) having in particular a planar outer surface bordered by intersecting a portion of the wall (22) and a portion of the base (20).

14. The blender jar (14) of any one of claims 1 to 13 wherein the at least one protrusion (38) is formed by a first surface (42) and a second surface (44) each formed as a generally convex or generally planar surface and is integrally formed with a portion of the wall (22) and with a portion of the base (20), the first surface (42) and the second surface (44) being angularly disposed with respect to one another, in particular along a midline (46) of the at least one protrusion (38),
optionally wherein in the upper portion of the at least one protrusion (38) a third surface (48) and a fourth surface (50) are formed, the first surface (42) being angularly disposed with respect to the second surface (44), the third surface (48) and the fourth surface (50), the first surface (42) and the third surface (48) being angularly disposed with respect to the second surface (44) and to the fourth surface (50), in particular along a midline (46) of the at least one protrusion (38), the first surface (42) being in particular angularly disposed with respect to the third surface (48) across a generally lateral line (52) and the second surface (44) being in particular angularly disposed with respect to the fourth surface (50) across the lateral line (52).

15. A blender (10) for comminuting foodstuffs comprising:
a housing (12);
a motor accommodated in the housing (12);
a controller operably connected to the motor for operating the motor through a plurality of blending modes; and
a blender jar (14) according to any one of the previous claims,
wherein a seat (18) is defined on an upper portion of the housing (12),
wherein the seat (18) comprises a keyed portion configured to be rotatably driven by the motor and
wherein the rotatable blade (34) is configured for operable interconnection to the keyed portion so that rotatable motion of the keyed portion imparts rotatable motion to the rotatable blade (34).
